# EUROPEAN PATENT SPECIFICATION

(11) **EP 1 829 301 B1**
(45) Date of publication and mention of the grant of the patent: **29.04.2009**
(21) Application number: 05823646.4
(22) Date of filing: 21.12.2005
(51) Int. Cl.: H04L 12/56

(54) **ATM PROTECTION SYSTEM**
ATM-SCHUTZSYSTEM
SYSTEME DE PROTECTION EN MODE DE TRANSFERT ASYNCHRONE (ATM)

(30) Priority: 23.12.2004 IT MI20042490
(43) Date of publication of application: 05.09.2007
(73) Proprietor: Ericsson AB, 164 80 Stockholm (SE)
(72) Inventor: PASIO, Francesco, I-16138 Genova (IT)
(74) Representative: Stasiewski, Piotr Grzegorz
(86) International application number: PCT/EP2005/057051
(87) International publication number: WO 2006/067194

(56) References cited:
- EP-A- 1 209 834
- US-A1- 2002 159 392
- US-B1- 6 259 837

## Description

This invention relates to a protection system in Asynchronous Transfer Mode (ATM) networks. ATM-level protection systems are defined in international standards such as the ITU-T recommendation I.630/G.808.1 and the PNNI systems defined by the ATM Forum.

In many cases, for example, in nodes for access networks with low capacity and cost, the implementation of such protection systems in ATM nodes can be too complicated and costly from the computational, and hence financial viewpoint. For example, in a ring network, there are three types of SNC/T I.630/G.808.1 standard protection systems that could be usable.

The first is a one-way "1 +1 "system. At each end point of the protection the traffic is transmitted on both the working path and the protection path and each end point chooses independently from which protection or working path to receive the traffic, with no need of using an Automatic Protection Switching (APS) protocol.

Another protection system is a two-way "1+1" system, in which, at each end point the traffic is transmitted both on the working path and on the protection path, and the APS protocol keeps the two end points aligned around the working or protection path in use at the time, in order to receive the traffic (that is both the end points receive either from the protection path or from the working path).

The third protection system is two-way "1:1" system, in which, at each end point the traffic is transmitted and received only by one path (protection or working) and the APS protocol keeps the two end points aligned so that the path selected is the same for both end points.

In low capacity and low cost access-networks nodes, such prior known systems cannot always be used. For example, it may be that the access equipment cannot support point-to-multipoint interconnections as required by the first two systems, or cannot support the APS protocol as required by the second and third systems.

US 2002/159392 (ADC Telecommunications) discloses a protection system for an ATM network. This reference uses the forward alarm signal (AIS) and the remote defect indication signal (RDI) to trigger switches. All of the nodes of the ring generate such alarms when they detect a failure.

In the present invention the forward alarm signal (AIS) is inhibited in the primary node and in the interconnecting network and the return alarm signal (RDI) is inhibited in the secondary node.

US 6,259,837 (Nortel Networks Ltd) discloses a protection a system for protecting the connection between two SDH network rings. This reference is not concerned with connections between a primary node and secondary nodes of an ATM network (see, the paragraph entitled "Background of the invention" in US 6,259,837). Similarly, European Patent 1,209,834 (Toshiba) refers to the International Standards ITU T/G.841 and ITUT/G.842 that apply to SDH/SONET systems. In this respect, one must not mix the ATM terminology used for the two end nodes of the protection paths, for example. ATM primary nodes and secondary nodes, with the terminology used for the nodes of an SDH system. ATM primary nodes and secondary nodes act very differently to the nodes of an SDH/SONET network.

For example, none of the nodes of a SDH network uses the concept of merging the received working and protection signals, whereas in an ATM network, the primary nodes merge the traffic from the working paths and the protection paths. In other words merging is applicable to ATM or packet transport but not to the SDH/SONET networks and the way that protection switching is achieved is very different.

An object of the present invention is to make available an innovative ATM solution capable of ensuring protection characteristics with low expenditure of resources and innovative characteristics.

In particular, the solution in accordance with the present invention also allows innovative performance compared to those obtainable with equipment using standard I.630/G.808.1 or PNNI protection mechanisms, together with scalability in some configurations (for example, constant exchange time independently of the number of equipments in the ring). This is achieved through low cost embodiments while keeping the software implementation simple and reliable.

According to one aspect of the present invention there is provided a protection system for an ATM network having a primary node and a secondary node interconnected through an ATM transport capable network. For each ATM connection between the primary and the secondary nodes, the ATM transport capable network makes available two independent bi-directional working and protection paths, the primary node configured to send traffic cells over both paths and configured to receive and perform merging of the traffic cells from both of the paths. The secondary node configured to transmit and receive traffic cells either on the bi-directional working path or on the bi-directional protection path, the primary node and the secondary node configured to establish test circuits between the primary and secondary nodes so as to monitor the continuity of the working and protection paths. In the event of the secondary node detecting the discontinuity of a test circuit for the path in use, the secondary node configured to switch the local traffic cells at the secondary node to the protection path, and the primary node configured to inhibit the generation of ATM-AIS, forward alarm signal, in the primary node and the ATM transport capable network configured to inhibit the generation of ATM-AIS, forward alarm signal, in the ATM transport capable network. The secondary node configured to inhibit generation of ATM-RDI, return alarm signal, in the secondary node, and the primary node configured not to perform a switching function.

This invention also relates to an ATM system with said protection system. Further aspects of the present invention are set out in the attached claims.

To clarify the explanation of the innovative principles of this invention and its advantages compared with the prior art there is described below with the aid of the annexed drawings a possible embodiment thereof by way of non-limiting example applying said principles. In the drawings:
FIGS 1 and 2 show a protection system in accordance with this invention in normal operating configuration and in a traffic reactivation mode after a failure,
FIGS 3 and 4 show diagrammatically a protection system in accordance with this invention similar to that of Figures 1 and 2, but applied to a ring network, and
FIGS 5 to 10 show consecutive steps of reactivation of traffic in case of one-way failure using the protection system of Figures 3 and 4, and shows switching from a working path to the corresponding protection path in applying the principles of this invention.

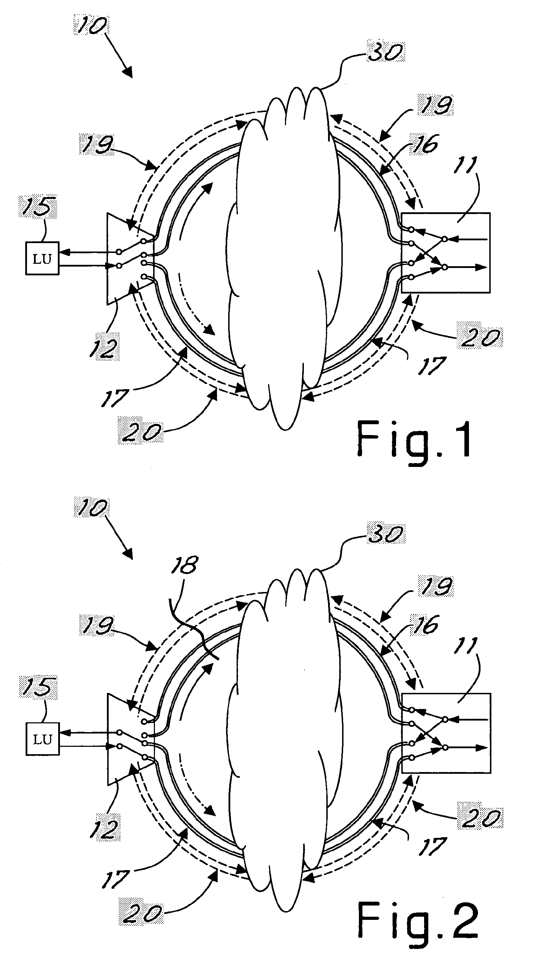

With reference to the figures, FIG 1 shows a protection system 10 in which there is a primary node (PN) 11 and a secondary node (SN) 12 connected through an ATM transport network 30. It is assumed that the SN 12 has a local user 15 connected through the working path 16 to the PN 11. Reference number 17 designates the associated protection path. In a normal situation as shown in FIG 1 the local traffic of the SN 12 travels on the path 16.

It should be noted that there is no constraint on the topology of said ATM transport network 30 and the only requirement is that it allows realization of the ATM connection between the PN 11 and the SN 12 over two independent paths 16, 17, that is to say, a single failure in the network can break one path (either 16 or 17) but not the both.

The continuity of the two paths is controlled by monitoring only two 2-way test circuits, to wit, one for the working path 16 and the other for the protection path 17, termed Test Trails 19, 20 respectively. The Test Trails of the working path 16 and the protection path 17 are shown diagrammatically with broken line arrows designated respectively by reference numbers 19 and 20.

The test trails 19,20 are the appropriate ATM VPCs (Virtual Path Connection) or VCCs (Virtual Channel Connection) created purposely to allow said monitoring by applying standard methods (for example through the 2-way Continuity Check functionality in accordance with ITU-T I.610 recommendation, on both PN and SN, or loop back in accordance with the ITU-T I.610 recommendation). Test cells generated by the SN 12 are transmitted to the PN 11 and retransmitted back from PN 11 to SN 12, or for example SN 12 generates a standard Continuity Check - 'source' Continuity Check function - and PN 11 realizes the ATM cross-connection of the VPC/VCC entering link of the Test Trail 19,20 from the SN 12 on the outgoing trail 19 or 20 towards the SN 12 (where the 'sink' Continuity Check function is performed).

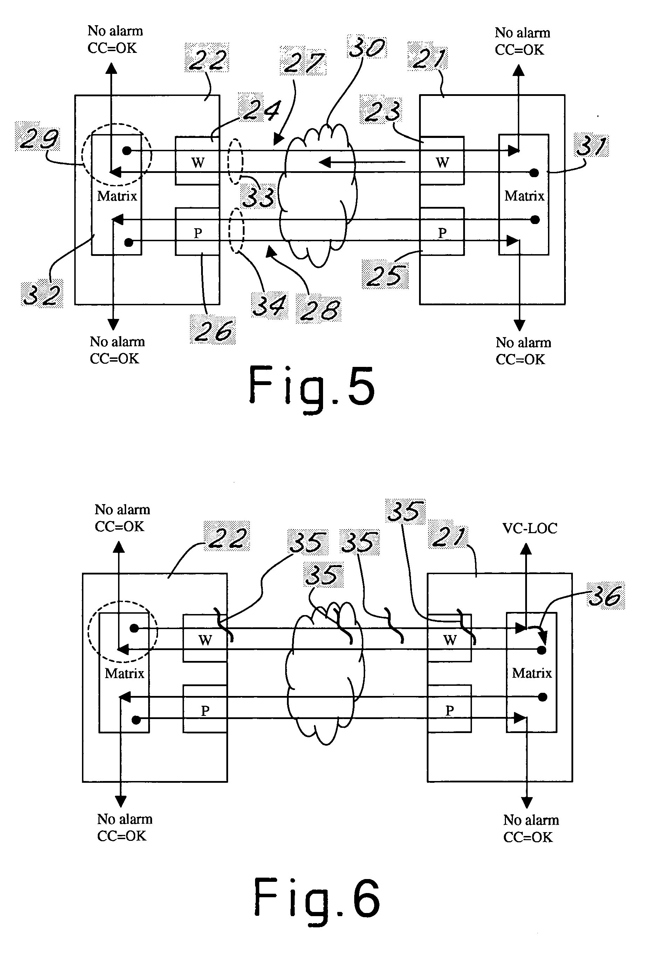

As described in greater detail below, FIGS 5 to 10 relate in particular to the case in which the SN 12 monitors its own Test Trails 19,20 (ATM VP/VC) through the 2-way Continuity Check functionality according to ITU-T I.610 but the substance of the invention would not change if the Test Trails were monitored in another manner.

As concerns the flow of traffic, the PN 11 in the direction towards the SN 12, always transmits the ATM cells of any circuit directed towards the SN 12 both on the working path 16 and the protection path 17 (multicast of the ATM cells). In the reverse direction, the PN 11 always performs channel merging of the ATM cells of the two VPC/VCC connections entering from the working path 16 and the protection path 17, where at any moment, only one of the two connections really carries the client's ATM cells while the other does not supply ATM cells, due to the mechanisms of the invention.

It is noted that the ATM merge function carried out by the PN 11 is not new but is a characteristic described in international standards (for example in ITU-T I.731) and is normally supplied by the ATM nodes. In any case, none of the prior known protection systems that conform to the I.630 recommendation use the merge function and, indeed, all of the prior known systems that comply with the I.630 recommendation always select only one of the two paths 16 or 17 from which to receive the traffic.

It is to be noted that the ITU G.808.1 contains the "merging" selector concept, however, this recommendation states (see paragraph 3.3.5.3.2) that merging works only in combination with switches in both working and protection inputs to the selector bridge, in order to prevent the AIS on the standby transport path being merged with the normal traffic signal selected from the active transport path. Therefore the active transport path 16 will have its switch closed, while the standby transport path 17 will have its switch opened.

This invention does not require the inclusion of such switches alternatively closed/open, but it is based on just the opposite mechanism, that is both working path 16 and protection path 17 are always merged, because AIS it is, a priori, supposed to be inhibited in the ring (exploiting the fact that this inhibition is acceptable in the ATM network of many Operators).

This idea, to keep AIS and RDI inhibited (ATM-AIS is inhibited in the PN 11 and in the interconnecting network 30, whilst ATM-RDI is inhibited in the SN 12), is a very distinctive point of the present invention.

In fact, there are other alternatives to avoid merging AIS/RDI, coming from the failed path (e.g. 16), with the good customer traffic 15, coming from the safe path (e.g. 17) but all these alternatives imply a burden of operations in the PN that this node cannot be able to perform. An example of such an unacceptable alternative would be to terminate the AIS and the RDI cells in the PN 11 before merging. Similarly it may be not cost effective to integrate such unacceptable operations in the PN 11.

In accordance with the principles of the invention, a failure that breaks one of the two paths 16 or 17, working or protection is detected by the SN 12 by monitoring of the Test Trails 19 and 20 and, for example, if the broken path is the working path 16, all the local traffic is switched to the other path 17.

The PN 11 does not perform any switching action on the traffic following a failure in the path 16 or 17.

FIG 2 also shows diagrammatically the occurrence of a failure, for example at point 18, that is on the working path 16.

This breaks the Test Trails 19 on working path 16. The SN 12 detects this and switches onto the protection path 17. In the direction towards the SN 12 the protection mechanism in accordance with this invention can be seen to work similarly to that of a standard I.630/G.808.1 SNC/T 1+1 protection unit. The PN 11 acts as a bridge to each channel on both the working and protection paths (16, 17) and the SN 12 selects on which side (path 16 or 17) to receive the signal depending on the state of the associated Test Trail 19 or 20.

The difference between the present invention and prior known protection systems that comply with the recommendation I.630/G.808.1 resides in the alarms that the SN 12 allows for to cause the protection mechanism to trip.

In the prior known I.630/G.808.1 protection systems, only the alarms indicating failure of the direction of reception (for example, Alarm Indication Signal AIS) are taken into consideration, while in the solution in accordance with this invention, the Remote Defect Indication (RDI) can cause the protection switching to trip to protect against one-way failures from SN 12 to PN 11 also, as clarified below.

In the direction from SN 12 to PN 11, the SN 12 can be seen to work similarly to the prior known protection systems of recommendation I.630/G.808.1 SNC/T 1:1. That is to say, that it transmits on the working path 16 or the protection path 17 depending on the state of the path. In the case of the present invention there is also a difference from the I.630/G.808.1 SNC/T 1:1 mechanisms because, while with these known mechanism it is the APS protocol that indicates which path 16, 17 must be used, with the system in accordance with this invention, no use is made of APS protocol and only the alarms derived from monitoring of the Test Trails 19, 20 including the RDI, cause switching of path selection and this is an innovation compared with the known protection systems.

Another difference is that with the present invention the PN 11 does not perform any switching action following failure in the ring 30, whereas with the prior known systems that comply with the I.630/G.808.1 recommendations have identical behavior for the two protection end points (11, 12).

The ATM protection in accordance with this invention therefore uses standard characteristics (multicast connections, merging of ATM connections, test trail monitoring) but in an innovative manner that allows indubitable operating advantages with limited cost while avoiding the need for more sophisticated and costly characteristics as would be required using standard systems.

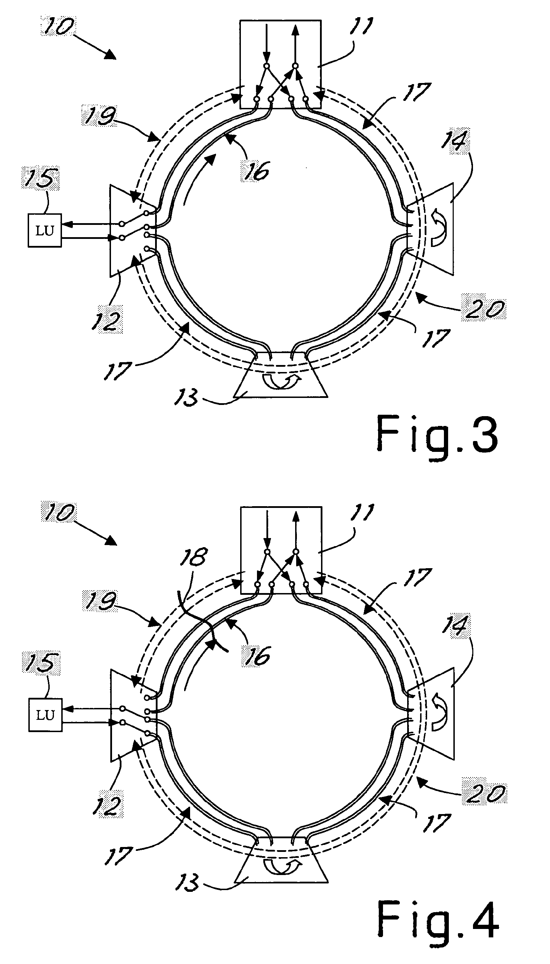

FIGS 3 and 4 show, by way of example, a protection system of the invention similar to that of FIGS 1 and 2, but with the nodes PN 11 and SN 12 connected in a ring network 30. In particular, in this case the PN 11 is also definable as Head Of Ring (HOR) and the nodes SN 12, 13, 14, are definable also as Other Ring Equipment (ORE).

In the figures 3 and 4, in addition to the SN 12 of FIGS 1 and 2, there are shown additional OREs (or SNs) 13 and 14 making up other nodes of the ring 30. Any ORE (12,13,14) proves the integrity of both the working path 16 and protection path 17 by monitoring its own Test Trails.

As in the example of FIGS 1 and 2, the SN 12 has local user traffic 15 connected over the working path 16 to the PN 11. The respective protection path 17 is the rest of the ring 30 in the opposite direction. In a normal situation, the local traffic travels on path 16.

The Test Trails 19, 20 of the working path 16 and the protection path 17 are shown diagrammatically, again with the broken-line arrows of reference numbers 19 and 20.

In accordance with the principles of this invention the position of a failure in the ring 30 determines which OREs are involved in the failure; only the OREs 12, 13, 14 involved, detect the failure by monitoring their own Test Trails 19, 20 and consequently activate a switching procedure, while the other OREs (12,13,14) do not take any action (no action is taken by any ORE (12,13,14) on the 'passing through' connections). If a failure is detected, the ORE (12,13,14) that detects it automatically switches only the ATM interconnections of its local clients from the failed path 16 or 17 to the other path to restore the traffic.

The HOR (PN 11) does not perform any action following a failure in the ring. In the particular case of the following example, upon occurrence of the failure 18, the Test Trails 19 on the working path 16 are broken. The ORE 12 detects this, and switches traffic 15 onto the protection path 17. The other OREs 13 and 14 not involved in the failure do not take any switching action and let pass the connections from and to, the ORE 12, whose connections now pass onto the protection path 17.

FIGS 5 to 10 show consecutive steps of a reactivation of traffic in case of one-way failure, with switching of the traffic 15 from a working path 16 to the corresponding protection path 17 by applying the principles of this invention in a generic network.

In particular, FIG 5 shows diagrammatically the connection (when the network 30 is without failures) between a PN 21 and an SN 22, and applying the protection principles in accordance with this invention. In the example of FIGS 5 to 10, the PNs and SNs have working ports (respectively 23 and 24) and protection ports (respectively 25 an 26) interconnected by working paths 27 and protection paths 28 over a generic transport network 30. The nodes 21 and 22 have within them respective known matrices 31, 32. In the situation of FIG 5 the traffic 15 uses the path indicated generically by reference number 29.

The VCC Test Trails of the ATM system (indicated diagrammatically by 33 and 34 for the working and protection paths respectively) allow surveillance of the connections.

As shown diagrammatically in FIG 5, when the network 30 is without failures, the status of the Test Trails is OK and the SN 22 uses the working path 33 for traffic.

FIGS 6, 7 and 8 show the same components as shown in FIG 5, during a sequence of operations that, due to a single one-way failure, that could happen, for example at any point among those indicated by reference number 35. The protection system in accordance with this invention uses basically standard signals of an ATM system, but in an innovative way.

In particular, FIG 6 shows detection of the ATM Loss Of Continuity condition (LOC) of the PN 21 (that causes emission of a VC-LOC) signal and insertion (36) of an ATM Remote Defect Indication (VC-RDI) on the still active path.

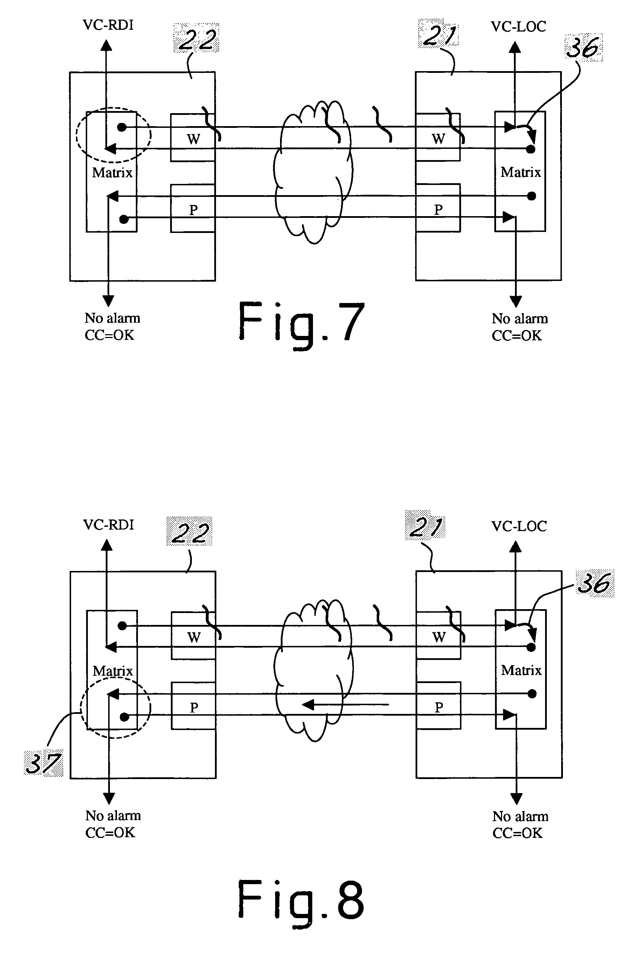

FIG 7 shows the RDI detection in the SN 22 with emission of the VC-RDI alarm signal.

FIG 8 shows the traffic switching that is done in the SN 22, which switches the local traffic onto the protection path (indicated by the numeral 37).

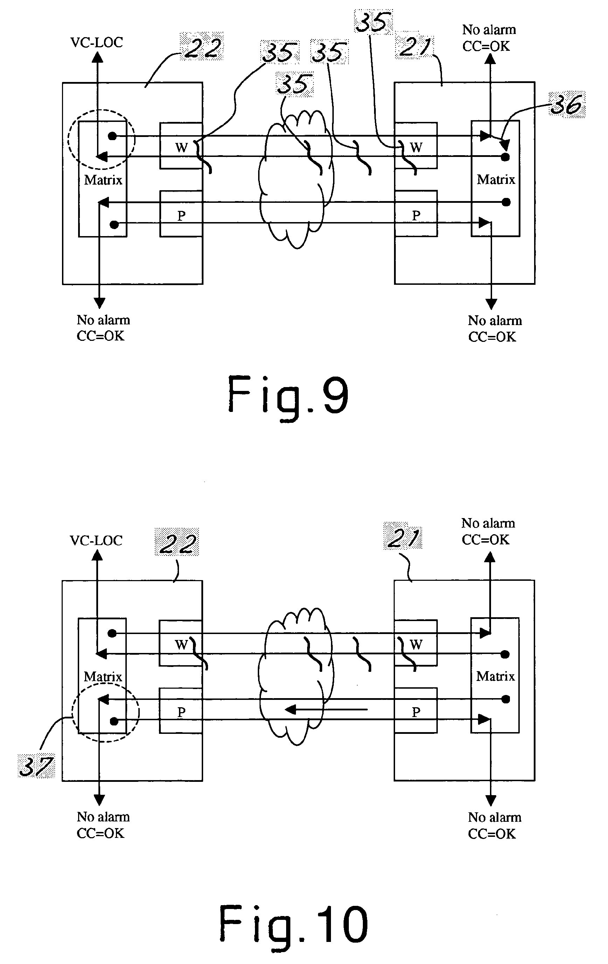

In the case illustrated in FIGS 9 and 10 of one-way failure associated with the other working direction, the operation is still simpler; the SN 22 detects the VC-LOC condition upon reception of the Test Trail 33, following which, the SN 22 switches local traffic onto the protection path 37.

It is now clear that the preset purposes have been achieved using a protection system in accordance with this invention.

In addition to simplicity and ease of implementation, it must also be considered that in some types of application of this invention compared with the prior known I.630/G.808.1 or PNNI protection systems, ensures better performance in the time employed to restore traffic following a failure. For example, in a ring network 30, with centripetal traffic from peripheral nodes (SN) to a central node (PN), the present invention ensures an exchange time that does not increase with the increase in the number of nodes in the ring 30, contrary to the prior known I.630/G.808.1 and PNNI solutions. Therefore present invention offers a more scalable solution compared with prior known systems.

In the solution in accordance with this invention the standard function of insertion of AIS/RDI following defects, as defined in the 1.610 Standard, must be inhibited (ATM-AIS shall be inhibited in the PN and in the interconnecting network, whilst ATM-RDI shall be inhibited in the SN). Otherwise in case of failure these cells would be brought together with the ATM cells of customers that arrive from the protection path and thus seriously disturb the customer's traffic. However, this inhibition is already operating in many networks (for example, access) for other reasons, hence in these cases the present invention is fully applicable.

Naturally the above description of an embodiment applying the innovative principles of this invention is given by way of non-limiting example of said principles within the scope of the exclusive right claimed here. In a further embodiment applying the principles of this invention, the primary and/or secondary node uses the system of this invention to protect only one part of the circuits of the local users connected thereto.

In a further embodiment of the present invention an individual physical ATM node can implement the protection system in accordance with this invention in an independent manner for multiple groups of its local users. This may be done, for example with an individual node that acts independently for each group either as the primary node or as a secondary node, so that each group of circuits is protected towards a different primary or secondary node in accordance with the present invention.

## Claims

**1.** A protection system for an ATM network (30) having a primary node (11,21) and a secondary node (12, 13,14,22) interconnected through an ATM transport capable network (30) and for each ATM connection between the primary (11,21) and the secondary nodes (12,13,14,22), the ATM transport capable network (30) makes available two independent bi-directional working and protection paths (16, 17), the primary node (11,21) configured to send traffic cells over both paths (16 and 17) and configured to receive and perform merging of the traffic cells from both of the paths and the secondary node (12,13,14,22) configured to transmit and receive traffic cells either on the bi-directional working path or on the bi-directional protection path, the primary node (11, 21) and the secondary node (12, 13, 14, 22) configured to establish test circuits between the primary and secondary nodes so as to monitor the continuity of the working and protection paths and, in the event of the secondary node (12,21) detecting the discontinuity of a test circuit for the path in use, **characterized by** the secondary node configured to switch the local traffic cells at the secondary node (12, 22) to the protection path, and the primary node configured to inhibit the generation of ATM-AIS, forward alarm signal, in the primary node (11,21) and the ATM transport capable network (30) configured to inhibit the generation of ATM-AIS, forward alarm signal, in the ATM transport capable network, and the secondary node configured to inhibit generation of ATM-RDI, return alarm signal, in the secondary node (12,13,14,22), and the primary node configured not to perform a switching function.

**2.** A protection system in accordance with claim 1, the secondary node (21,22) to use the ATM Loss of continuity, LOC, condition to detect lack of continuity of the test circuits (19, 20) relevant to the direction from primary node (11,13,14,21) to secondary node (12,13,14,22) and the secondary node (12,13,14,22) configured to use the Remote Defect Indication, RDI, to detect lack of continuity of the test circuit relevant to the other direction, and the RDI is inserted in an appropriate test circuit extending towards the secondary node (12,13,14,22) from the primary node (11, 21) dependant upon which test circuit the LOC condition is detected by the primary node (11,21).

**3.** A protection system in accordance with claim 1 in which the secondary node (12,13,14,22) configured to generate continuity check cells on the test circuits towards the primary node (11,21) where they are looped back, and then the secondary node (12,13,14,22) configured to monitor the cells, for detecting any fault of the paths (16, 17) and then switch local traffic cells at the secondary node to the protection path.

**3.** A protection system in accordance with claim 1, the secondary node configured to generate the standard loop back cells on the test circuits towards the primary node, the primary node configured to loop back the cells to the secondary node and then the secondary node, monitoring the cells, configured to detect can detect any fault of the path and then switch local traffic cells at the secondary node to the protection path.

**5.** A protection system in accordance with any one of claims 1 to 4 in which the primary and secondary nodes are connected in a ring network.

**6.** A protection system in accordance with any one of claims 1 to 5 in which an ATM physical node implements the protection system independently for multiple groups of its local users while being able to act for each group indifferently as a primary node (11,21) or secondary node (12,13,14,22) and each group of circuits being protected against a different primary (11,21) or secondary node (12, 22).

**7.** An ATM system incorporating the protection system in accordance with any one of the claims 1-6.

**8.** A method of protecting ATM connections of an ATM network (30) having a primary node (11, 21) and a secondary node (12,13,14,22) interconnected through an ATM transport capable network (30) that has an independent bi-directional working path (16) and a protection path (17) interconnecting the primary node (11,21) and the secondary node (12,13,14,22), and in which the primary node (11,21) sends traffic cells over both paths and receives and performs merging of the traffic cells from both paths (16,17) and the secondary node (12,13,14,22) transmits and receives traffic cells either on the working path (16) or on the protection path (17), wherein the continuity of the working and protection paths (16,17) is monitored through the creation of appropriate ATM test circuits (19, 20), the method **characterized by** comprising the steps of
(a) inhibiting the generation of an ATM-AIS, forward alarm signal, in the primary node (11,21) and in the interconnecting network (30);
(b) inhibiting the generation of an ATM-RDI, return alarm signal, in the secondary node (12,13,14,22), and
(c) in the event that the secondary node detects a discontinuity of one of the paths, switching the local traffic cells from the failed path to the other path as the case may be at the secondary node (12, 13, 14, 22), while no switching of the traffic cells is performed at the primary node (11, 21).

**9.** A method according to claim 8 wherein the secondary node (12, 13, 14, 22) is operable to use the ATM Loss of continuity, LOC, condition to detect lack of continuity of the test circuits (19, 20) relevant to the direction from the primary node (11, 21) towards the secondary node (12,13,14,22), and uses the ATM Remote Defect Indication signal, RDI, to detect lack of continuity of the test circuits relevant to the direction from the secondary node (12, 13, 14, 22) towards the primary node (11,21) and inserts the RDI signal in the appropriate protection path extending from the primary node (11, 21) towards the secondary node (12,13,14,22) dependant upon which test circuit the LOC condition is detected at the primary node (11,21).

**10.** A method according to claim 8 or claim 9 wherein the secondary node (12, 13, 14, 22) generates continuity check cells on the test circuits (19, 20) relevant to the two paths (16, 17) extending towards the primary node (11,21) where they are looped back, and the secondary node (12, 13, 14, 22), monitors the cells to detect any fault of the path (16, 17) and then switches the traffic cells to the appropriate path (16 or 17) as the case may be.

## Patentansprüche

1. Sicherungssystem für ein ATM-Netz (30) mit einem primären Knoten (11, 21) und einem sekundären Knoten (12, 13, 14, 22), die durch ein ATM-transportfähiges Netz (30) miteinander verbunden sind, und für jede ATM-Verbindung zwischen den primären (11, 21) und den sekundären Knoten (12, 13, 14, 22), wobei das ATMtransportfähige Netz (30) zwei unabhängige bidirektionale Betriebs- und Sicherungswege (16, 17) zur Verfügung stellt, der primäre Knoten (11, 21) so konfiguriert ist, dass er Verkehrszellen über beide Wege (16 und 17) sendet, und so konfiguriert ist, dass er die Verkehrszellen von beiden Wegen empfängt und eine Vereinigung derselben durchführt, und der sekundäre Knoten (12, 13, 14, 22) so konfiguriert ist, dass er Verkehrszellen entweder auf dem bidirektionalen Betriebsweg oder auf dem bidirektionalen Sicherungsweg sendet und empfängt, der primäre Knoten (11, 21) und der sekundäre Knoten (12, 13, 14, 22) so konfiguriert sind, dass sie Prüfkreise zwischen den primären und sekundären Knoten herstellen, um die Kontinuität der Betriebs- und Sicherungswege zu überwachen, und **dadurch gekennzeichnet, dass** der sekundäre Knoten so konfiguriert ist, dass er, falls der sekundäre Knoten (12, 21) die Diskontinuität eines Prüfkreises für den Weg in Verwendung erfasst, die lokalen Verkehrszellen am sekundären Knoten (12, 22) auf den Sicherungsweg umschaltet, und der primäre Knoten (11, 21) so konfiguriert ist, dass er die Erzeugung eines ATM-AIS oder Alarmsignals in Vorwärtsrichtung im primären Knoten (11, 21) verhindert, und das ATMtransportfähige Netz (30) so konfiguriert ist, dass es die Erzeugung eines ATM-AIS oder Alarmsignals in Vorwärtsrichtung im ATM-transportfähigen Netz (30) verhindert, und der sekundäre Knoten so konfiguriert ist, dass er die Erzeugung eines ATM-RDI oder Alarmsignals in Rückwärtsrichtung im sekundären Knoten (12, 13, 14, 22) verhindert, und der primäre Knoten so konfiguriert ist, dass er keine Umschaltfunktion ausführt.

2. Sicherungssystem nach Anspruch 1, wobei der sekundäre Knoten (12, 22) die ATM-Kontinuitätsverlust- oder - LOC-Bedingung verwendet, um einen Mangel an Kontinuität der Prüfkreise (19, 20) zu erfassen, der für die Richtung vom primären Knoten (11, 13, 14, 21) zum sekundären Knoten (12, 13, 14, 22) relevant ist, und der sekundäre Knoten (12, 13, 14, 22) so konfiguriert ist, dass er die Fernfehleranzeige oder RDI verwendet, um einen Mangel an Kontinuität des Prüfkreises zu erfassen, der für die andere Richtung relevant ist, und die RDI in Abhängigkeit davon, bei welchem Prüfkreis die LOC-Bedingung durch den primären Knoten (11, 21) erfasst wird, in einen entsprechenden Prüfkreis eingefügt wird, der sich vom primären Knoten (11, 21) zum sekundären Knoten (12, 13, 14, 22) erstreckt.

3. Sicherungssystem nach Anspruch 1, wobei der sekundäre Knoten (12, 13, 14, 22) so konfiguriert ist, dass er Kontinuitätsprüfungszellen auf den Prüfkreisen zum primären Knoten (11, 21) erzeugt, wo sie rückgeführt werden, und der sekundäre Knoten (12, 13, 14, 22) so konfiguriert ist, dass er dann die Zellen überwacht, um jeglichen Fehler der Wege (16, 17) zu erfassen, und dann lokale Verkehrszellen am sekundären Knoten auf den Sicherungsweg umschaltet.

4. Sicherungssystem nach Anspruch 1, wobei der sekundäre Knoten so konfiguriert ist, dass er die Standardrückführzellen auf den Prüfkreisen zum primären Knoten erzeugt, der primäre Knoten so konfiguriert ist, dass er die Zellen zum sekundären Knoten rückführt, und der sekundäre Knoten, der die Zellen überwacht, so konfiguriert ist, dass er dann jeglichen Fehler des Weges erfasst und lokale Verkehrszellen am sekundären Knoten auf den Sicherungsweg umschaltet.

5. Sicherungssystem nach einem der Ansprüche 1 bis 4, wobei die primären und sekundären Knoten in einem Ringnetz verbunden sind.

6. Sicherungssystem nach einem der Anschlüsse 1 bis 5, wobei ein physikalischer ATM-Knoten das Sicherungssystem für mehrere Gruppen seiner lokalen Benutzer unabhängig implementiert, während er in der Lage ist, für jede Gruppe gleichermaßen als ein primärer Knoten (11, 21) oder sekundärer Knoten (12, 13, 14, 22) zu agieren, und jede Gruppe von Kreisen gegen einen verschiedenen primären (11, 21) oder sekundären Knoten (12, 22) gesichert ist.

7. ATM-System, umfassend das Sicherungssystem nach einem der Ansprüche 1 bis 6.

8. Verfahren zum Sichern von ATM-Verbindungen eines ATM-Netzes (30) mit einem primären Knoten (11, 21) und einem sekundären Knoten (12, 13, 14, 22), die durch ein ATM-transportfähiges Netz (30) miteinander verbunden sind, das einen unabhängigen bidirektionalen Betriebsweg (16) und einen Sicherungsweg (17) aufweist, die den primären Knoten (11, 21) und den sekundären Knoten (12, 13, 14, 22) verbinden, und wobei der primäre Knoten (11, 21) Verkehrszellen über beide Wege sendet und die Verkehrszellen von beiden Wegen (16, 17) empfängt und eine Vereinigung derselben durchführt, und der sekundäre Weg (12, 13, 14, 22) Verkehrszellen entweder auf dem Betriebsweg (16) oder auf dem Sicherungsweg (17) sendet und empfängt, wobei die Kontinuität der Betriebs- und Sicherungswege (16, 17) durch die Erzeugung von entsprechenden ATM-Prüfkreisen (19, 20) überwacht wird, und das Verfahren **dadurch gekennzeichnet ist, dass** es die folgenden Schritte umfasst:
(a) Verhindern der Erzeugung eines ATM-AIS oder Alarmsignals in Vorwärtsrichtung im primären Knoten (11, 21) und im Verbindungsnetz (30);
(b) Verhindern der Erzeugung eines ATM-RDI oder Alarmsignals in Rückwärtsrichtung im sekundären Knoten (12, 13, 14, 22), und
(c) gegebenenfalls Umschalten der lokalen Verkehrszellen vom fehlerhaften Weg auf den anderen Weg am sekundären Knoten (12, 13, 14, 22), falls der sekundäre Knoten eine Diskontinuität eines der Wege erfasst, während am primären Knoten (11, 21) kein Umschalten der Verkehrszellen erfolgt.

9. Verfahren nach Anspruch 8, wobei der sekundäre Knoten (12, 13, 14, 22) so betrieben werden kann, dass er die ATM-Kontinuitätsverlust- oder -LOC-Bedingung verwendet, um einen Mangel an Kontinuität der Prüfkreise (19, 20) zu erfassen, der für die Richtung vom primären Knoten (11, 21) zum sekundären Knoten (12, 13, 14, 22) relevant ist, und das ATM-Fernfehleranzeigesignal oder -RDI verwendet, um einen Mangel an Kontinuität der Prüfkreise zu erfassen, der für die Richtung vom sekundären Knoten (12, 13, 14, 22) zum primären Knoten (11, 21) relevant ist, und das RDI-Signal in Abhängigkeit davon, bei welchem Prüfkreis die LOC-Bedingung am primären Knoten (11, 21) erfasst wird, in den entsprechenden Sicherungsweg einfügt, der sich vom primären Knoten (11, 21) zum sekundären Knoten (12, 13, 14, 22) erstreckt.

10. Verfahren nach Anspruch 8 oder 9, wobei der sekundäre Knoten (12, 13, 14, 22) Kontinuitätsprüfzellen auf den Prüfkreisen (19, 20) erzeugt, die für die beiden Wege (16, 17) relevant sind, die sich zum primären Knoten (11, 21) erstrecken, wo sie rückgeführt werden, und der sekundäre Knoten (12, 13, 14, 22) die Zellen überwacht, um jeglichen Fehler des Weges (16, 17) zu erfassen, und dann die Verkehrszellen gegebenenfalls auf den entsprechenden Weg (16, 17) umschaltet.

## Revendications

1. Système de protection pour réseau en mode de transfert asynchrone (ATM)(30) ayant un noeud primaire (11,21) et un noeud secondaire (12,13,14,22) interconnectés par un réseau apte au transport ATM (30) et pour chaque connexion ATM entre les noeuds primaire (11,21) et secondaire (12,13,14,22), le réseau apte au transport ATM (30) rend disponibles deux conduits de travail et de protection (16,17) bidirectionnels indépendants, le noeud primaire (11,21) étant configuré afin d'envoyer des cellules de trafic via les deux conduits (16 et 17) et configuré afin de recevoir et effectuer une fusion des cellules de trafic provenant des deux conduits et le noeud secondaire (12,13,14,22) étant configuré afin d'émettre et recevoir des cellules de trafic soit sur le conduit de travail bidirectionnel, soit sur le conduit de protection bidirectionnel, le noeud primaire (11,21) et le noeud secondaire (12,13,14,22) étant configurés afin d'établir des circuits de test entre les noeuds primaire et secondaire de manière à surveiller la continuité des conduits de travail et de protection et au cas où le noeud secondaire (12,21) détecte la discontinuité d'un circuit de test pour le conduit en cours d'utilisation, **caractérisé par** le noeud secondaire étant configuré afin de commuter les cellules de trafic local au niveau du noeud secondaire (12,22) sur le conduit de protection et le noeud primaire étant configuré afin d'inhiber la génération d'ATM-AIS, signal d'alerte d'acheminement, dans le noeud primaire (11,21) et le réseau apte au transport ATM (30) étant configuré afin d'inhiber la génération d'ATM-AIS, signal d'alerte d'acheminement, dans le réseau apte au transport ATM, et le noeud secondaire étant configuré afin d'inhiber la génération d'ATM-RDI, signal d'alerte de renvoi, dans le noeud secondaire (12,13,14,22), et le noeud primaire étant configuré afin de ne pas exécuter une fonction de commutation.

2. Système de protection selon la revendication 1, le noeud secondaire (21,22) utilisant la condition de perte de continuité ATM, LOC, afin de détecter l'absence de continuité des circuits de test (19,20) capitaux dans la direction du noeud primaire (11,13,14,21) au noeud secondaire (12,13,14,22) et le noeud secondaire (12,13,14,22) étant configuré afin d'utiliser l'indication de défaut distant, RDI, afin de détecter l'absence de continuité du circuit de test capital dans l'autre direction, et la RDI est insérée dans un circuit de test approprié s'étendant dans la direction du noeud secondaire (12,13,14,22) à partir du noeud primaire (11,21) en fonction du circuit de test via lequel la condition LOC est détectée par le noeud primaire (11,21).

3. Système de protection selon la revendication 1, dans lequel le noeud secondaire (12,13,14,22) est configuré afin de générer des cellules de vérification de continuité sur les circuits de test dans la direction du noeud primaire (11,21) où elles sont renvoyées en boucle, et ensuite le noeud secondaire (12,13,14,22) est configuré afin de surveiller les cellules, pour détecter n'importe quel défaut des conduits (16,17) et ensuite commuter les cellules de trafic local au niveau du noeud secondaire sur le conduit de protection.

4. Système de protection selon la revendication 1, le noeud secondaire étant configuré afin de générer les cellules renvoyées en boucle standard sur les circuits de test dans la direction du noeud primaire, le noeud primaire étant configuré afin de renvoyer en boucle les cellules vers le noeud secondaire et ensuite le noeud secondaire, surveillant les cellules, configuré à des fins de détection peut détecter n'importe quel défaut du conduit et ensuite commuter les cellules de trafic local au niveau du noeud secondaire vers le conduit de protection.

5. Système de protection selon une quelconque des revendications 1 à 4, dans lequel les noeuds primaire et secondaire sont connectés dans un réseau en anneau.

6. Système de protection selon une quelconque des revendications 1 à 5, dans lequel un noeud physique ATM implémente le système de protection indépendamment pour des groupes multiples de ses utilisateurs locaux tout en étant apte à agir pour chaque groupe indifféremment comme un noeud primaire (11,21) ou un noeud secondaire (12,13,14,22) et chaque groupe de circuits étant protégé contre un noeud primaire (11,21) ou secondaire (12,22) différent.

7. Système ATM incorporant le système de protection selon une quelconque des revendications 1 à 6.

8. Procédé de protection de connexions ATM d'un réseau ATM (30) ayant un noeud primaire (11,21) et un noeud secondaire (12,13,14,22) interconnectés par un réseau apte au transport ATM (30) qui possède un conduit de travail (16) et un conduit de protection (17) bidirectionnels indépendants interconnectant le noeud primaire (11,21) et le noeud secondaire (12,13,14,22), et dans lequel le noeud primaire (11,21) envoie des cellules de trafic via les deux conduits et reçoit et effectue une fusion des cellules de trafic provenant des deux conduits (16,17) et le noeud secondaire (12,13,14,22) émet et reçoit des cellules de trafic soit sur le conduit de travail (16), soit sur le conduit de protection (17), dans lequel la continuité des conduits de travail et de protection (16,17) est surveillée à travers la création de circuits de test ATM (19,20) appropriés, le procédé étant **caractérisé en ce que** il comprend les étapes consistant à :
(a) inhiber la génération d'un ATM-AIS, signal d'alerte d'acheminement, dans le noeud primaire (11,21) et dans le réseau d'interconnexion (30) ;
(b) inhiber la génération d'un ATM-RDI, signal d'alerte de renvoi, dans le noeud secondaire (12,13,14,22), et
(c) au cas où le noeud secondaire détecte une discontinuité d'un des conduits, commuter les cellules de trafic local du conduit défaillant vers l'autre conduit comme cela peut être le cas au niveau du noeud secondaire (12,13,14,22) alors que aucune commutation des cellules de trafic n'est effectuée au niveau du noeud primaire (11,21).

9. Procédé selon la revendication 8, dans lequel le noeud secondaire (12,13,14,22) peut être mis en fonctionnement afin d'utiliser la condition de perte de continuité ATM, LOC, pour détecter une absence de continuité des circuits de test (19,20) capitale dans la direction du noeud primaire (11,21) vers le noeud secondaire (12,12,14,22) et utilise le signal d'indication de défaut distant ATM, RDI, pour détecter l'absence de continuité des circuits de test capitaux dans la direction du noeud secondaire (12,13,14,22) vers le noeud primaire (11,21) et insère le signal RDI dans le conduit de protection approprié s'étendant du noeud primaire (11,21) vers le noeud secondaire (12,13,14,22) en fonction du circuit de test via lequel la condition LOC est détectée au niveau du noeud primaire (11,21).

10. Procédé selon la revendication 8 ou 9, dans lequel le noeud secondaire (12,13,14,22) génère des cellules de vérification de continuité sur les circuits de test (19,20) capitaux pour les deux conduits (16,17) s'étendant dans la direction du noeud primaire (11,21) où elles sont renvoyées en boucle, et le noeud secondaire (12,13,14,22) surveille les cellules afin de détecter n'importe quel défaut du conduit (16,17) et commute ensuite les cellules de trafic sur le conduit approprié (16 ou 17) le cas échéant.
